# FASCICULE DE BREVET EUROPEEN

(11) **EP 2 392 843 B1**
(45) Date de publication et mention de la délivrance du brevet: **22.08.2018**
(21) Numéro de dépôt: 11166977.6
(22) Date de dépôt: 20.05.2011
(51) Int. Cl.: F16K 11/07, F16K 47/08

(54) **Distributeur hydraulique**
Hydraulisches Wegeventil
Hydraulic directional control valve

(30) Priorité: 04.06.2010 FR 1054430
(43) Date de publication de la demande: 07.12.2011
(73) Titulaire: Safran Landing Systems, 78140 Vélizy-Villacoublay (FR)
(72) Inventeur: Jubert Xavier, 92100, Boulogne Billancourt (FR); Fraval, Jérôme, 78220, Viroflay (FR); Meziane, Sébastien, 91940, Les Ulis (FR); Ernis, Sébastien, 92290, Châtenay Malabry (FR)
(74) Mandataire: Parzy, Benjamin Alain

(56) Documents cités:
- DE-A1- 2 833 358
- DE-A1- 3 129 594
- DE-A1- 19 847 703
- GB-A- 190 902 195
- US-A- 2 648 313

## Description

L'invention est relative à un distributeur hydraulique.

### ARRIERE-PLAN TECHNOLOGIQUE DE L'INVENTION

On connaît des distributeurs comportant une chemise engagée dans un orifice d'un corps hydraulique pour définir avec ce dernier plusieurs chambres hydrauliquement isolées. Des ports hydrauliques du corps permettent de mettre en communication ces chambres avec les divers composants hydrauliques du circuit. La chemise comporte divers perçages pour mettre en communication les chambres avec l'intérieur de la chemise. La chemise reçoit un tiroir coulissant qui comporte des portions ajustées pour coulisser à étanchéité contre une paroi interne de la chemise et qui définissent entre eux des chambres mobiles qui mettent sélectivement en communication les chambres via les perçages de la chemise, en fonction de la position du tiroir dans la chemise.

Le document DE 31 29 594 montre un distributeur hydraulique selon le préambule de la revendication 1.

### OBJET DE L'INVENTION

Dans certaines applications, il est important d'éviter les pics de pression qui peuvent survenir quand l'une des portions ajustées passe au regard d'un perçage de la chemise. L'invention a pour objet de proposer une disposition constructive permettant de diminuer le risque de pic de pression dans de telles circonstances.

### BREVE DESCRIPTION DE L'INVENTION

En vue de la réalisation de ce but, on propose un distributeur hydraulique selon la revendication 1. Ainsi, lorsque du déplacement de l'élément mobile (par exemple un tiroir ou un clapet) tendant à mettre en communication l'un des ports hydrauliques avec l'une des chambres, le perçage de régulation est alors progressivement ouvert d'abord par le passage de la partie détalonnée de la portion ajustée, puis par le passage de la partie non détalonnée de la portion ajustée. Le perçage de régulation est ainsi ouvert progressivement et la mise en communication hydraulique se fait ainsi avec un risque diminué de pic de pression. Le déplacement du tiroir se poursuit alors pour découvrir les perçages de mise en communication pour mettre pleinement en communication le port hydraulique concerné et la chambre correspondante.

A l'inverse, lorsque du déplacement de l'élément mobile tendant à isoler l'un des ports hydrauliques de l'une des chambres, ladite portion passe devant les perçages de mise en communication de la chambre concernée pour les boucher, de sorte qu'enfin de déplacement, seul l'orifice de régulation n'est pas encore bouché, laissant subsister un équilibre de pression entre la chambre concernée et l'intérieur de la chemise. Le perçage de régulation est alors fermé progressivement d'abord par le passage de la partie détalonnée de la portion ajustée, puis par le passage de la partie non détalonnée de la portion ajustée. Le perçage de régulation est ainsi bouché progressivement et la fermeture hydraulique se fait ainsi avec un risque diminué de pic de pression.

### BREVE DESCRIPTION DES FIGURES

L'invention sera mieux comprise à la lumière de la description qui suit d'un mode particulier de réalisation en référence aux figures des dessins annexés parmi lesquelles :
- la figure 1 est une vue en coupe longitudinale d'un distributeur à tiroir selon un mode particulier de réalisation de l'invention selon un plan passant par les perçages de régulation, le tiroir étant en position de repos intermédiaire entre deux positions extrêmes;
- la figure 2 est une vue en coupe longitudinale du distributeur de la figure, selon un plan passant par les perçages de mise en communication de la chemise, et illustrant le tiroir dans l'une des positions extrêmes ;
- la figure 3 est une vue analogue à celle de la figure 1, illustrant le tiroir dans l'autre des positions extrêmes ;
- la figure 4 est une vue de détail de la figure 1, montrant l'un des perçages de régulation et la partie détalonnée du tiroir.

### DESCRIPTION DETAILLEE DES FIGURES

Le distributeur de l'invention est particulièrement adapté à être intégré dans un circuit hydraulique de manoeuvre d'atterrisseurs d'un aéronef. On utilisera par exemple ce distributeur pour alimenter des vérins des manoeuvres permettant le déploiement et la rétraction d'un atterrisseur. Dans ce type d'application, il est courant d'observer des pics de pression lors de la manoeuvre de l'élément mobile coulissant du distributeur, ce qui peut conduire à des à-coups et à une fatigue inutile du circuit hydraulique. Cependant, bien que particulièrement adapté à cette application, le distributeur de l'invention peut être utilisé dans d'autres circuits hydrauliques dans lesquels on désire minimiser le risque de pic de pression.

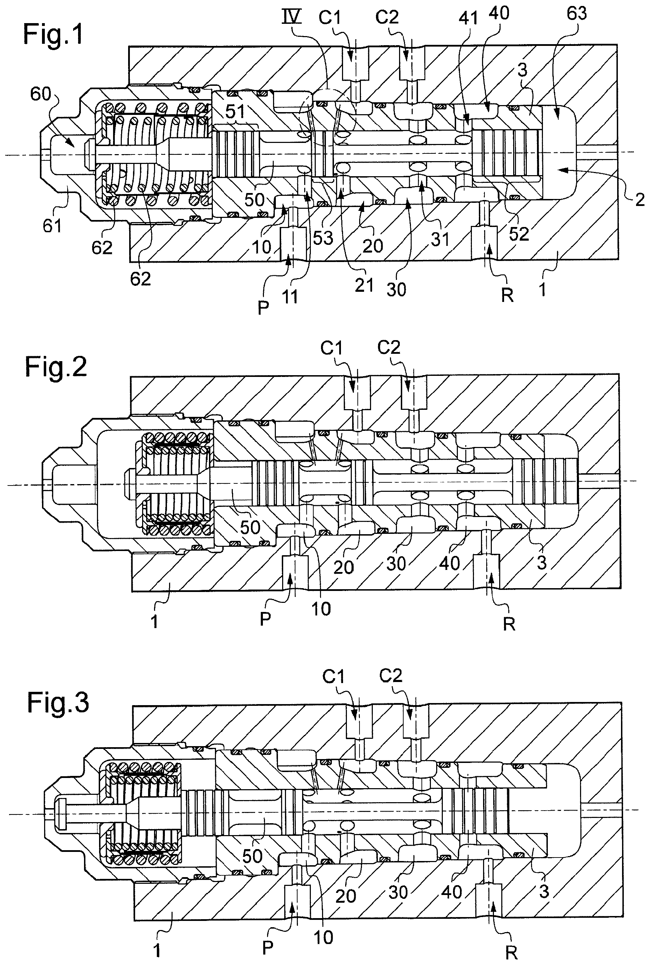

En référence à la figure 1, le distributeur selon un mode particulier de l'invention comporte un corps 1 dans lequel un orifice 2 a été percé pour recevoir une chemise 3. Le corps 1 et la chemise 3 comportent diverses portées d'étanchéité qui délimitent entre elles et avec la paroi interne de l'orifice 2 et la paroi externe de la chemise 3 des chambres hydrauliques 10, 20, 30, 40, respectivement connectées au port d'alimentation P, à un port actif C1, un port actif C2, et un port de retour R. Ces ports sont connectés respectivement à une source de pression, une première ligne hydraulique menant par exemple à la chambre pleine d'un vérin, une deuxième ligne hydraulique menant par exemple à la chambre annulaire du même vérin, et enfin à une mise au retour.

La chemise 3 comporte des perçages de mise en communication 11, 21, 31, 41, qui relient respectivement les chambres 10, 20, 30, 40 avec l'intérieur de la chemise 3. Les perçages de mise en communication sont ici au nombre de six par chambre, répartis régulièrement, et s'étendent ici selon des directions radiales perpendiculaires à un axe longitudinale de la chemise 3.

Un élément mobile, ici un tiroir 50, est disposé dans la chemise 3 pour coulisser entre deux positions extrêmes illustrées aux figures 2 et 3, en passant par une position intermédiaire stable illustrée à la figure 1. Le tiroir 50 comporte trois portions ajustées 51, 52, 53 qui portent à étanchéité contre la paroi interne de la chemise 3 et forment des paliers de guidage du tiroir 50.

Les zones s'étendant dans la chemise entre les portions ajustées forment des chambres de connexion mobiles avec le tiroir pour mettre sélectivement en relation hydraulique les chambres du distributeur selon les configurations suivantes :
- lorsque le tiroir est en position intermédiaire illustrée à la figure 1, la chambre 10 est isolée des autres chambres, tandis que les chambres 20, 30, et 40 sont mises en communication. Le port d'alimentation P est ainsi isolé, tandis que les ports C1 et C2 sont reliés au port de retour R ;
- lorsque le tiroir est dans la première position extrême illustrée à la figure 2, la chambre 10 est en communication avec la chambre 20, tandis que la chambre 30 est en communication avec la chambre 40. Le port C1 est ainsi relié au port d'alimentation P, tandis que le port C2 est relié au port de retour R ;
- lorsque le tiroir est dans la deuxième position extrême illustrée à la figure 3, la chambre 10 est en communication avec les chambres 20 et 30, tandis que la chambre 40 est isolée des autres chambres. Les ports C1 et C2 sont ainsi tous deux connectés au port d'alimentation P.

Une première chambre de pilotage 60 est organisée dans un bouchon fileté 61 qui vient s'engager dan un taraudage du corps coaxial à l'orifice 2 et qui maintient la chemise en position. L'alimentation de la première chambre de pilotage déplace le tiroir 60 vers la première position extrême à l'encontre de ressorts 62 rappelant le tiroir vers la position intermédiaire de la figure 1. Une deuxième chambre de pilotage 63 est organisée à une extrémité du tiroir directement dans le fond de l'orifice 2, et dont l'alimentation provoque le déplacement du tiroir vers la deuxième position extrême à l'encontre des ressorts de rappel 62.

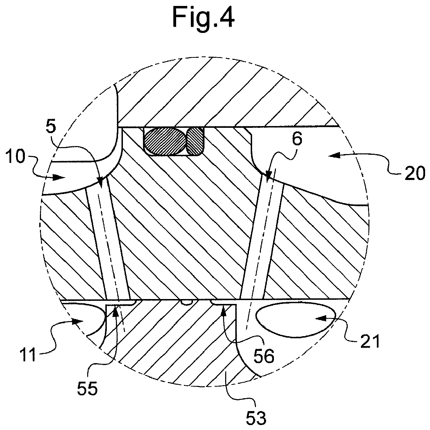

Selon l'invention, l'une des portions ajustées 53 du tiroir 50 comporte des parties de front qui présentent des détalonnages 55, 56 comme cela est visible à la figure 4. Les détalonnages ont été exagérés sur la figure, mais ils sont en réalité très légers, de l'ordre de quelques dixièmes de millimètre. Ils sont de préférence cylindriques, c'est-à-dire réalisés sur toute la périphérie de la portion ajustée 53. Toujours selon l'invention, la chemise 3 comporte deux perçages de régulation 5 et 6, qui sont ici d'un diamètre inférieur aux perçages de mise en communication. Le perçage de régulation 5 débouche dans la chambre 10 qui est reliée au port d'alimentation P, tandis que le perçage de régulation 6 débouche dans la chambre 20 reliée au port actif C1. Les perçages de régulation sont ici inclinés pour déboucher à l'intérieur de la chemise 3 de façon à être le premier perçage à être découvert par la portion ajustée 53 lors du déplacement du tiroir, ou à être le dernier perçage à être bouché par la portion ajustée 53 lors du déplacement du tiroir.

Plus précisément, et partant de la première position extrême illustrée à la figure 2, un retour du tiroir vers la position intermédiaire stable suppose que la portion ajustée 53 commence par passer devant les perçages de mise en communication 21 pour les boucher. Lorsque ceux-ci sont bouchés, le perçage de régulation 6 n'est lui pas encore bouché, de sorte qu'un équilibre de pression est toujours possible entre la chambre 20 et la chambre 10. Puis, le tiroir 50 continuant à se déplacer, le détalonnage 55 va passer devant le perçage de régulation 6 pour commencer à le boucher. Cependant, ce bouchage est progressif, puisque, bien qu'obstrué de plus en plus complètement par la portion ajustée du tiroir, le détalonnage 55 empêche un bouchage complet du perçage de régulation 6. Cependant, au fur et à mesure de l'avancement du tiroir, la communication entre la chambre 20 et la chambre 10 devient progressivement de plus en plus limitée. Celle-ci est finalement interrompue lorsque la partie non détalonnée de la portion ajourée 52 passe devant le perçage de régulation 6. Cette progressivité entraîne une isolation très progressive de la chambre 20 d'avec la chambre 10, en minimisant les risques de pics de pression.

De la même façon, partant de la deuxième position extrême illustrée à la figure 3, un retour du tiroir vers la position intermédiaire stable suppose que la portion ajustée 53 commence par passer devant les perçages de mise en communication 11 pour les boucher. Lorsque ceux-ci sont bouchés, le perçage de régulation 5 n'est lui pas encore bouché, de sorte qu'un équilibre de pression est toujours possible entre la chambre 10 et la chambre 20. Puis, le tiroir 50 continuant à se déplacer, le détalonnage 56 va passer devant le perçage de régulation 5 pour commencer à le boucher. Cependant, ce bouchage et progressif, puisque, bien qu'obstrué de plus en plus complètement par la portion ajustée du tiroir, le détalonnage 55 empêche un bouchage complet du perçage de régulation 5. Cependant, au fur et à mesure de l'avancement du tiroir, la communication entre la chambre 10 et la chambre 20 devient progressivement de plus en plus limitée. Celle-ci est finalement interrompue lorsque la partie non détalonnée de la portion ajourée 53 passe devant le perçage de régulation 5. Cette progressivité entraîne une isolation très progressive de la chambre 20 d'avec la chambre 10, en minimisant les risques de pics de pression.

Inversement, lors d'un déplacement du tiroir 50 de la position stable pour se déplacer vers la première position extrême illustrée à la figure 2, la portion ajustée 53 commence par découvrir progressivement le perçage de régulation 6. Le détalonnage 55 va passer devant le perçage de régulation 6 pour commencer à le découvrir. Cependant, ce découvrement est progressif, au fur et à mesure que le détalonnage 55 passe en regard du perçage de régulation 6 jusqu'à ce que le perçage de régulation 6 soit entièrement découvert. Un équilibre de pression s'instaure alors progressivement sans pic de pression. Puis les perçages de mise en communication sont découverts pour permettre des débits de fluide conséquents, alors que l'équilibre de pression est réalisé.

De la même façon, lors d'un déplacement du tiroir 50 de la position stable pour se déplacer vers la deuxième position extrême illustrée à la figure 3, la portion ajustée 53 commence par découvrir progressivement le perçage de régulation 5. Le détalonnage 56 va passer devant le perçage de régulation 5 pour commencer à le découvrir. Cependant, ce découvrement est progressif, au fur et à mesure que le détalonnage 56 passe en regard du perçage de régulation 5 jusqu'à ce que le perçage de régulation 5 soit entièrement découvert. Un équilibre de pression s'instaure alors progressivement sans pic de pression. Puis les perçages de mise en communication sont découverts pour permettre des débits de fluide conséquents, alors que l'équilibre de pression est réalisé.

L'invention n'est pas limitée à ce qui vient d'être décrit, mais englobe plus généralement toute variante entrant dans le cadre défini par les revendications.

En particulier, bien que l'on ait illustré un distributeur avec deux perçages de régulation et deux détalonnages, de sorte que la régulation ait lieu dans les deux sens de déplacement du distributeur, on pourra bien sûr n'utiliser qu'un seul couple perçage de régulation/détalonnage, si le problème de pic de pression ne doit être traité que pour un seul sens de déplacement du tiroir.

Bien sûr, il est également possible de moduler l'amortissement des pics de pression en jouant sur le diamètre des perçages de régulation et/ou sur le nombre de perçages de régulation débouchant dans la même chambre.

Ainsi la chemise peut comporter une pluralité de perçages de régulation débouchant dans la même chambre, les perçages de régulation étant répartis radialement sur la périphérie de la chemise pour être découverts ou recouverts sensiblement simultanément. L'ensemble des perçages de régulation débouchant dans la même chambre forme une section de passage totale dont la valeur est fonction de l'amortissement souhaité.

Bien évidemment, les dispositions de l'invention s'appliquent à tout type de distributeur hydraulique à au moins deux positions. L'invention s'applique ainsi à des distributeurs à tiroir, comme illustré ici, mais également à des distributeurs à clapet, et plus généralement, à tout distributeur comportant un élément coulissant mobile passant devant des perçages.

## Revendications

1. Distributeur hydraulique comportant un corps (1) dans lequel un orifice (2) est creusé pour recevoir une chemise (3) qui comporte des portées d'étanchéité externes qui définissent avec une paroi de l'orifice des chambres (10, 20, 30, 40) hydrauliquement isolées qui sont connectées à des ports hydrauliques (C1, C2, P, R) du corps, la chemise comportant des perçages de mise en communication (11, 21, 31, 41) pour relier au moins certaines des chambres à l'intérieur de la chemise et recevant un élément mobile (50) coulissant entre une première position extrême et une deuxième position extrême en passant par une position intermédiaire, cet élément mobile (50) comportant des portions ajustées (51, 52, 53) pour coulisser à étanchéité contre une paroi interne de la chemise, deux des chambres (10, 20) étant adjacentes entre elles et étant sélectivement :
- mises en communication lorsque cet élément mobile (50) est dans l'une quelconque de ses première ou deuxième positions extrêmes par un premier (11) et un second (21) perçage de mise en communication qui débouchent respectivement dans les deux chambres adjacentes (10, 20) ;
- isolées par une portion ajustée (53) de l'élément mobile (50) lorsque l'élément mobile (50) est en position intermédiaire, **caractérisé en ce que** :
- la chemise comporte au moins un premier perçage de régulation (5) qui débouche dans une première des deux chambres adjacentes (10, 20) ; **en ce que**
- la portion ajustée (53) isolant les chambres adjacentes lorsque l'élément mobile (50) est en position intermédiaire comporte des parties de front présentant chacune un détalonnage (55, 56), ces détalonnages (55, 56) étant agencés pour passer en regard du premier perçage de régulation (5) lors du déplacement de l'élément mobile (50) entre ses première et deuxième positions extrêmes, et **en ce que**
- le premier perçage de régulation débouche à l'intérieur de la chemise (3) de façon à ce que :
- le premier perçage de régulation (5) soit bouché après le premier perçage de communication (11) par la portion ajustée (53) présentant les détalonnages lorsque l'élément mobile (50) coulisse de la première position extrême à la position intermédiaire ; et à ce que
- le premier perçage de régulation (5) soit découvert avant le premier perçage de communication (11) par la portion ajustée (53) présentant les détalonnages lorsque l'élément mobile (50) coulisse de la position intermédiaire à la première position extrême.

2. Distributeur hydraulique selon la revendication 1, dans lequel :
- la chemise comporte un second perçage de régulation (6) qui débouche dans une seconde des deux chambres adjacentes (10, 20) ;
- les détalonnages (55, 56) étant agencés pour passer en regard du second perçage de régulation (6) lors du déplacement de l'élément mobile (50) entre ses première et deuxième positions extrêmes ;
- le second perçage de régulation débouche à l'intérieur de la chemise (3) de façon à ce que :
- le second perçage de régulation (6) soit bouché après le deuxième perçage de communication (21) par la portion ajustée (53) présentant les détalonnages lorsque l'élément mobile (50) coulisse de la deuxième position extrême à la position intermédiaire;
- le second perçage de régulation (6) soit découvert avant le deuxième perçage de communication (21) par la portion ajustée (53) présentant les détalonnages lorsque l'élément mobile (50) coulisse de la position intermédiaire à la deuxième position extrême.

3. Distributeur hydraulique selon la revendication 2, dans lequel le premier perçage de régulation et le second perçage de régulation présentent un diamètre inférieur aux perçages de mise en communication.

4. Distributeur hydraulique selon l'une quelconque des revendications 1 à 3, dans lequel les deux détalonnages (55, 56) sont réalisés sur toute la périphérie de la portion ajustée (53).

5. Distributeur hydraulique selon la revendication 4, dans lequel les deux détalonnages (55, 56) sont cylindriques.

6. Distributeur hydraulique selon l'une quelconque des revendications 1 à 5, dans lequel ladite position intermédiaire est une position stable.

7. Distributeur hydraulique selon l'une quelconque des revendications 1 à 5, dans lequel l'élément mobile (50) est un tiroir.

## Patentansprüche

1. Hydraulischer Verteiler, umfassend einen Körper (1), in dem eine Öffnung (2) ausgebildet ist, um eine Buchse (3) aufzunehmen, die äußere Dichtflächen umfasst, die mit einer Wand der Öffnung hydraulisch isolierte Kammern (10, 20, 30, 40) definieren, die mit hydraulischen Öffnungen (C1, C2, P, R) des Körpers verbunden sind, wobei die Buchse Verbindungsherstellungsbohrungen (11, 21, 31, 41) umfasst, um zumindest einige der Kammern mit dem Inneren der Buchse zu verbinden, und ein bewegliches Element (50) aufnimmt, das sich zwischen einer ersten Endposition und einer zweiten Endposition verschiebt und dabei über eine Zwischenposition läuft, wobei dieses bewegliche Element (50) angepasste Abschnitte (51, 52, 53) umfasst, um sich auf dichte Weise an einer Innenwand der Buchse zu verschieben, wobei zwei der Kammern (10, 20) aneinander angrenzen und selektiv:
- durch eine erste Verbindungsherstellungsbohrung (11) und eine zweite Verbindungsherstellungsbohrung (12), die jeweils in eine der beiden angrenzenden Kammern (10, 20) münden, in Verbindung gebracht werden, wenn dieses bewegliche Element (50) in seiner ersten oder seiner zweiten Endposition ist;
- durch einen angepassten Abschnitt (53) des beweglichen Elements (50) isoliert werden, wenn das bewegliche Element (50) in der Zwischenposition ist, **dadurch gekennzeichnet, dass**:
- die Buchse mindestens eine erste Regulierungsbohrung (5) umfasst, die in eine erste der beiden angrenzenden Kammern (10, 20) mündet; dass
- der angepasste Abschnitt (53), der die angrenzenden Kammern isoliert, wenn das bewegliche Element (50) in der Zwischenposition ist, Frontabschnitte umfasst, die jeweils einen Rücksprung (55, 56) aufweisen, wobei diese Rücksprünge (55, 56) so ausgebildet sind, dass sie während der Verschiebung des beweglichen Elements (50) zwischen seiner ersten und seiner zweiten Endposition gegenüber der ersten Regulierungsbohrung (5) vorbeilaufen, und dass
- die erste Regulierungsbohrung derart ins Innere der Buchse (3) mündet, dass:
- die erste Regulierungsbohrung (5) nach der ersten Verbindungsbohrung (11) von dem die Rücksprünge aufweisenden angepassten Abschnitt (53) verschlossen wird, wenn sich das bewegliche Element (50) von der ersten Endposition in die Zwischenposition verschiebt; und dass
- die erste Regulierungsbohrung (5) vor der ersten Verbindungsbohrung (11) von dem die Rücksprünge aufweisenden angepassten Abschnitt (53) freigelegt wird, wenn sich das bewegliche Element (50) von der Zwischenposition in die erste Endposition verschiebt.

2. Hydraulischer Verteiler nach Anspruch 1, bei dem:
- die Buchse eine zweite Regulierungsbohrung (6) umfasst, die in eine zweite der beiden angrenzenden Kammern (10, 20) mündet;
- wobei die Rücksprünge (55, 56) so ausgebildet sind, dass sie während der Verschiebung des beweglichen Elements (50) zwischen seiner ersten und seiner zweiten Endposition gegenüber der zweiten Regulierungsbohrung (6) vorbeilaufen;
- die zweite Regulierungsbohrung derart ins Innere der Buchse (3) mündet, dass:
- die zweite Regulierungsbohrung (6) nach der zweiten Verbindungsbohrung (21) von dem die Rücksprünge aufweisenden angepassten Abschnitt (53) verschlossen wird, wenn sich das bewegliche Element (50) von der zweiten Endposition in die Zwischenposition verschiebt;
- die zweite Regulierungsbohrung (6) vor der zweiten Verbindungsbohrung (21) von dem die Rücksprünge aufweisenden angepassten Abschnitt (53) freigelegt wird, wenn sich das bewegliche Element (50) von der Zwischenposition in die zweite Endposition verschiebt.

3. Hydraulischer Verteiler nach Anspruch 2, bei dem die erste Regulierungsbohrung und die zweite Regulierungsbohrung einen Durchmesser aufweisen, der kleiner als die Verbindungsherstellungsbohrungen ist.

4. Hydraulischer Verteiler nach einem der Ansprüche 1 bis 3, bei dem die beiden Rücksprünge (55, 56) über den gesamten Umfang des angepassten Abschnittes (53) ausgebildet sind.

5. Hydraulischer Verteiler nach Anspruch 4, bei dem die beiden Rücksprünge (55, 56) zylindrisch sind.

6. Hydraulischer Verteiler nach einem der Ansprüche 1 bis 5, bei dem die Zwischenposition eine stabile Position.

7. Hydraulischer Verteiler nach einem der Ansprüche 1 bis 5, bei dem das bewegliche Element (50) ein Schieber ist.

## Claims

1. A hydraulic valve comprising a body (1) in which a bore (2) is formed in order to receive a sleeve (3) that includes sealing seats that cooperate with a wall of the bore to define hydraulically isolated chambers (10, 20, 30, 40) that are connected to hydraulic ports (C1, C2, P, R) in the body, the sleeve including connection holes (11, 21, 31, 41) in order to connect at least certain chambers with the inside of the sleeve and receiving a movable element (50) that is slidable between a first end position and a second end position via an intermediate position, said movable element (50) comprising fitted portions (51, 52, 53) each adapted in order to slide in leaktight manner against an inside wall of the sleeve, two of said chambers (10, 20) being adjacent, said adjacent chambers (10, 20) being selectively :
- put into communication when said movable element (50) is moved in any of said first or second end positions by a first (11) and a second (21) connection holes respectively opening out in said adjacent chambers (10, 20) ;
- isolated from each other by one fitted portion (53) of said movable element (50) when said movable element (50) is in said intermediate position, **characterized in that** :
- the sleeve includes at least a first regulator hole (5) that opens out inside a first one of said two adjacent chambers (10, 20); and **in that**
- said fitted portion (53) isolating the adjacent chambers from each other when said movable element (50) is in said intermediate position, includes face portions each presenting a setback (55, 56), said setbacks (55, 56) being disposed in order to pass over the first regulator hole (5) when the movable element (50) is moved between its first and second end positions; and **in that**
- said first regulator hole opens out inside the sleeve (3) in such a manner as:
- the first regulator hole (5) is obstructed after the first connection hole (11) by said fitted portion (53) presenting said setbacks when said movable element (50) slides from said first end position to said intermediate position ; and **in that**
- the first regulator hole (5) is uncovered before the first connection hole (11) by said fitted portion (53) presenting said setbacks when said movable element (50) slides from said intermediate position to said first end position.

2. A hydraulic valve according to claim 1, wherein:
- the sleeve includes a second regulator hole (6) that opens out inside a first one of said two adjacent chambers (10, 20);
- said setbacks (55, 56) being disposed in order to pass over the second regulator hole (6) when the movable element (50) is moved between its first and second end positions;
- said second regulator hole opens out inside the sleeve (3) in such a manner as:
- the second regulator hole (6) is obstructed after the second connection hole (21) by said fitted portion (53) presenting said setbacks when said movable element (50) slides from said second end position to said intermediate position ;
- the second regulator hole (6) is uncovered before the second connection hole (21) by said fitted portion (53) presenting said setbacks when said movable element (50) slides from said intermediate position to said second end position.

3. A hydraulic valve according to claim 2, wherein said first regulator holes and the second regulator holes present a diameter that is less than the diameter of the connection holes.

4. A hydraulic valve according to anyone of claims 1 to 3, wherein said setbacks (55, 56) are made along the entire periphery of the fitted portion (53).

5. A hydraulic valve according to claim 4, wherein said setbacks (55, 56) are cylindrical.

6. A hydraulic valve according to anyone of claims 1 to 5, wherein said intermediate position is a stable position.

7. A hydraulic valve according to anyone of claims 1 to 5, wherein said movable element (50) is a slide.
